# EUROPÄISCHE PATENTSCHRIFT

(11) **EP 0 944 501 B1**
(45) Veröffentlichungstag und Bekanntmachung des Hinweises auf die Patenterteilung: **12.10.2005**
(21) Anmeldenummer: 97953647.1
(22) Anmeldetag: 15.12.1997
(51) Int. Cl.: B60R 21/16

(54) **AIRBAG, INSBESONDERE SEITENAIRBAG**
AIRBAG, ESPECIALLY LATERAL AIRBAG
AIRBAG, NOTAMMENT AIRBAG LATERAL

(30) Priorität: 17.12.1996 DE 19654490; 14.02.1997 DE 19707347
(43) Veröffentlichungstag der Anmeldung: 29.09.1999
(73) Patentinhaber: TAKATA - PETRI Aktiengesellschaft, 63743 Aschaffenburg (DE)
(72) Erfinder: PAUSCH, Tobias, D-13127 Berlin (DE); MARKFORT, Dieter, D-13189 Berlin (DE); ADOMEIT, Heinz-Dieter, D-10623 Berlin (DE)
(74) Vertreter: Baumgärtel, Gunnar
(86) Internationale Anmeldenummer: PCT/DE1997/002968
(87) Internationale Veröffentlichungsnummer: WO 1998/026959

(56) Entgegenhaltungen:
- WO-A1-94/19215
- US-A- 5 044 663

## Beschreibung

Die Erfindung betrifft einen Airbag, insbesondere Seitenairbag nach dem Oberbegriff des Anspruchs 1.

Zum Schutz des Insassen eines Fahrzeuges bei einem Seitenaufprall sind Seitenairbags bekannt. Diese sind beispielsweise in den Türen oder in den seitlichen Verkleidungen des Fahrzeugs vorgesehen. Diese Seitenairbags breiten sich im Crashfall auch nach oben aus, so daß auch Körperpartien, die in der Höhe der Fenster liegen geschützt sind.

Diese so angeordneten Seitenairbags sind aber nicht geeignet, auch den Kopf des Insassen zu schützen. Es sind deshalb Airbags bekannt, die im Fahrzeugsitz integriert sind. So ist aus dem DE 94 15 511. 9 U1 eine Kopfstütze mit integriertem Gaskissen bekannt. Dieses erstreckt sich im aufgeblasenen Zustand seitlich vom Kopfbereich in Vorwärtsfahrtrichtung. Der Nachteil eines solchen Airbags im Sitz besteht darin, daß der für die Zündung des Gasgenerators benötigte Sensor über ein Kabel mit der Energieversorgung des Kfz verbunden sein muß. Da Fahrzeugsitze aber in den meisten Fällen bewegbar und auch abnehmbar sind, stören diese Kabel.

Es sind deshalb auch Seitenairbags bekannt, die in der Höhe des Kopfes seitlich im Fahrzeug angeordnet sind. Hierbei erstreckt sich der Gassack zwischen der A- und B-Säule oder der B- und C-Säule des Kfz. Im aufgeblasenen Zustand deckt der Gassack den Bereich eines Seitenfensters ab. In gefalteter Lage wird der Gassack über dem Fensterrahmen verstaut, d.h., er erstreckt sich entlang einer Kurve. In dieser gewölbten Lage ist deshalb der Abstand zwischen den Befestigungstellen größer als bei einem geradlinigen Verlauf des Gassacks im aufgeblasenen Zustand. Daraus leitet sich die Notwendigkeit ab, den Gassack oder Befestigungsabschnitte des Gassackes in dessen aufgeblasener Lage zu straffen.

Hierzu ist aus der DE 195 19 297 bekannt, den Gassack an der A-Säule mit einem Seil zu versehen, das über eine Strammeinrichtung läuft. Diese weist eine Umlenkrolle auf, an der das Seil um 180° umgelenkt wird. Die Umlenkrolle ist mittels einer weiteren mechanischen Vorrichtung, die elektronisch angesteuert wird, verschiebbar, wodurch der umgelenkte Teil des Seils verlängert und damit eine Straffwirkung erzielt wird. Diese Strammeinrichtung wird während des Aufblasvorganges in Betrieb genommen. Der Nachteil besteht darin, daß eine solche Strammeinrichtung einen zusätzlichen mechanischen und elektronischen Aufwand bedeutet.

Weiterhin ist aus der WO 94/19215 ein Seitenairbag für den Schutz des Kopfes bekannt, der sich ebenfalls zwischen zwei Säulen des Kfz, z.B. zwischen der A- und B-Säule, erstreckt. Der Gassack ist schlauchförmig und besteht aus kreuzweise übereinanderliegenden Fäden, zwischen denen sich elastisches Material erstreckt. Die Fäden liegen bei dem nicht aufgeblasenen Gassack, der in diesem Zustand oberhalb eines Fahrzeugfensters verstaut ist, nahezu parallel zueinander. Nach dem Aufblasen drehen sich die Fäden in die Hauptentfaltungsrichtung des Gassackes. Dadurch vergrößert sich der Durchmesser des Gassackes, während sich die Länge verringert. Damit tritt ohne besondere zusätzliche mechanische oder elektronische Hilfsmittel ebenfalls eine Straffwirkung ein. Der Nachteil besteht aber darin, daß der Gassack aus dem genannten speziellen Material bestehen muß.

Aus der EP 0814 001 A1 ist noch ein Seitenairbag bekannt, der im gefalteten Zustand im gewölbten Dachkantenbereich einer Fahrzeugkarosserie lagert und mittels Spannbändern an den Enden mit der Karosserie verbunden ist. Bei der Entfaltung verkürzen die Spannbänder den Gassack, indem sie senkrecht zur Längsrichtung ausgelenkt werden.

Der Erfindung liegt die Aufgabe zugrunde, eine Straffwirkung bei einem Airbag, insbesondere einem Seitenairbag ohne zusätzliche mechanische Vorrichtungen und die zugehörige Elektronik und ohne Verwendung eines speziellen Materials für den Gassack zu erzielen.

Erfindungsgemäß wird das gemäß den Merkmalen des Anspruchs 1 erreicht.

Bei einem Airbag, insbesondere Seitenairbag mit vorzugsweise schlauchartiger Form, der mit mindestens zwei Stellen des Kfz in Verbindung steht und im unaufgeblasenen Zustand in einem gewölbten Stauraum untergebracht ist, mit zwei Straffleinen für das Verkürzen des entfalteten Gassacks zwischen dem Gassack und je einer Befestigungsstelle am Kfz, wobei die Straffleinen durch den sich aufblasenden Gassack straffbar sind, ist erfindungsgemäß vorgesehen, daß die Straffleinen durch Laschen an einem Ende des Gassacks zu gegenüberliegenden Enden des Gassacks geführt sind, wobei die Befestigungsstellen der Straffleinen am Gassack zusammen mit diesem beim Aufblasen des Gassacks von der Befestigungsstelle der jeweiligen Straffleine am Kfz wegbewegbar sind.

Bei dem erfindungsgemäßen Airbag wird also eine Bewegung eines Teiles des Gassackes und insbesondere eine Bewegung entgegengesetzt zur Befestigungsstelle des Straffseils am Kfz oder am Gassack beim Aufblasen des Gassackes ausgenutzt, um die Straffleine und damit den Gassack bei dessen Entfaltung zu straffen. Die Länge der Straffleine kann bei dieser Entfaltung unverändert bleiben oder verkürzt werden. Der Vorteil der Ausnutzung der Gassackbewegung für das Straffen besteht darin, daß keine zusätzlichen mechanischen Vorrichtungen mit zugehöriger Elektronik erforderlich sind, und daß der Gassack aus den üblichen Materialien bestehen kann.

Es ist zweckmäßig, daß die Straffleine im unaufgeblasenem Zustand des Gassacks mit dem in Richtung der Lasche gefal-Gassacks von der Lasche und von der Befestigungsstelle der Straffleine am Kfz weg und überträgt dabei diese Bewegung auf die Straffleine.

In einer Ausführungsform ist vorgesehen, daß die Straffleinen an ihren Befestigungsstellen mit dem Gassack als Führungslaschen für die jeweils andere Straffleine ausgebildet.

Die Straffleinen können aus unelastischem oder elastisch verformbarem Material bestehen.

Es ist weiterhin zweckmäßig, daß jede Straffleine mindestens eine Rücklaufsperre aufweist, die eine Bewegung der Straffleine entgegen der Entfaltungsrichtung des Gassackes verhindert, eine Bewegung der Straffleine in Entfaltungsrichtung des Gassackes dagegen zuläßt und/oder daß mindestens eine zusätzliche Stützlasche für die Führung der Straffleine im knickgefährdeten mittleren Bereich des Gassackes vorgesehen ist.

Durch die Anordnung einer Rücklaufsperre oder einer zusätzlichen Straffleinen-Stützlasche wird verhindert, daß der schlauchförmige Gassack nach seiner Entfaltung während der Belastung durch den Insassen einknickt. Durch das Einknicken würde der Schutz für den Insassen beeinträchtigt.

In einer bevorzugten Ausführungsform ist die Rücklaufsperre als Führungslasche ausgebildet und anstelle einer Führungs-Bei Anordnung von zwei Straffleinen weist jede Straffleine eine Rücklaufsperre auf.

Bei Anordnung von zwei sich kreuzenden Straffleinen ist es zweckmäßig, in deren Kreuzungsbereich eine Doppelrücklaufsperre vorzusehen.

In einer bevorzugten Ausführungsform weist die Rücklaufsperre zwei relativ zueinander bewegbare Keile auf, zwischen deren gegenüberliegenden Keilflächen die Straffleine verläuft und die durch mindestens ein elastisch verformbares Befestigungsmittel gegeneinander drückbar sind. Bei der Entfaltung des Gassackes drücken die Straffleinen entgegen der Kraft des elastisch verformbaren Befestigungsmittels die Keilflächen voneinander weg, und die Straffleine wird mit dem Ende des Gassackes, an dem sie befestigt ist, mitgezogen und strafft den entfalteten Gassack. Beim Entweichen des Gases aus dem Gassack nach Beendigung des Entfaltungsvorganges werden die Keilflächen unter der Wirkung des elastisch verformbaren Befestigungsmittels gegeneinandergedrückt. Die Straffleine wird dabei an dieser Stelle fixiert. Dadurch bleibt die Straffleine zwischen ihrer Befestigungsstelle am Kraftfahrzeug und den Keilflächen gespannt, auch wenn der Gassack durch das Entweichen des Gases in sich zusammenfällt. Damit wird ein Einknicken des Gassackes weitestgehend verhindert.

Es ist zweckmäßig, daß ein Keil fest angeordnet ist, während der andere Keil gegenüber dem festen Keil verschiebbar ist und das elastisch verformbare Befestigungsmittel aufeine Zugfeder vorgesehen sein, deren Wirkrichtung im wesentlichen entgegen der Zugrichtung der Straffleine bei der Entfaltung des Gassacks verläuft.

Zur Erhöhung der Klemmwirkung der Keilflächen ist es zweckmäßig, daß die gegenüberliegenden Keilflächen Riefen aufweisen, die zumindest annnähernd quer zur Bewegungsrichtung der Straffleine verlaufen.

In einer weiteren Ausgestaltung ist vorgesehen, daß mindestens eine zusätzliche Stützlasche zwischen den an den Enden des Gassacks vorgesehenen Rücklaufsperren bzw. Führungslaschen vorgesehen ist. Diese Stützlasche stellt im Fall der Verwendung von Rücklaufsperren ein zusätzliches Mittel zur Verhinderung des Einknickens des Gassacks dar. Für den Fall, daß anstelle der Rücklaufsperren Führungslaschen verwendet werden, ist die Stützlasche das einzige Mittel zur Verminderung des Einknickens des Gassacks.

Die Erfindung soll in Ausführungsbeispielen anhand von Zeichnungen erläutert werden. Es zeigen:
- Fig. 8a, b: eine Ausführungsform, bei der eine an einem Ende mit dem Gassack verbundene Straffleine eine Umlenklasche bildet;
- Fig. 8c: einen Schnitt durch die Fig. 8a in Richtung der Pfeile VIII - VIII in vergrößertem Maßstab;
- Fig. 9a, b: eine Ausführungsform, bei der jede Strafflei- ne an einem Ende des Gassackes lose geführt und an dessen anderem Ende befestigt ist, in gefalteter und entfalteter Lage;
- Fig. 16: einen Gassack im aufgeblasenen Zustand, der an gegenüberliegenden Enden je eine Rücklauf- sperre für je eine Straffleine aufweist;
- Fig. 17: eine vergrößerte Darstellung des Schnittes durch eine Rücklaufsperre gemäß der Einzel- heit E1 der Fig. 16;
- Fig. 18: einen Gassack im aufgeblasenen Zustand, der eine Doppelrücklaufsperre aufweist;
- Fig. 19: eine vergrößerte Darstellung des Schnittes durch die Doppelrücklaufsperre gemäß der Ein- zelheit E2 der Fig. 18;
- Fig. 20: einen Gassack im aufgeblasenen Zustand mit zwei Führungs- und einer Stützlasche.

Die restlichen Figuren zeigen nicht- erfindungsgemäße Ausführungs-Formen.

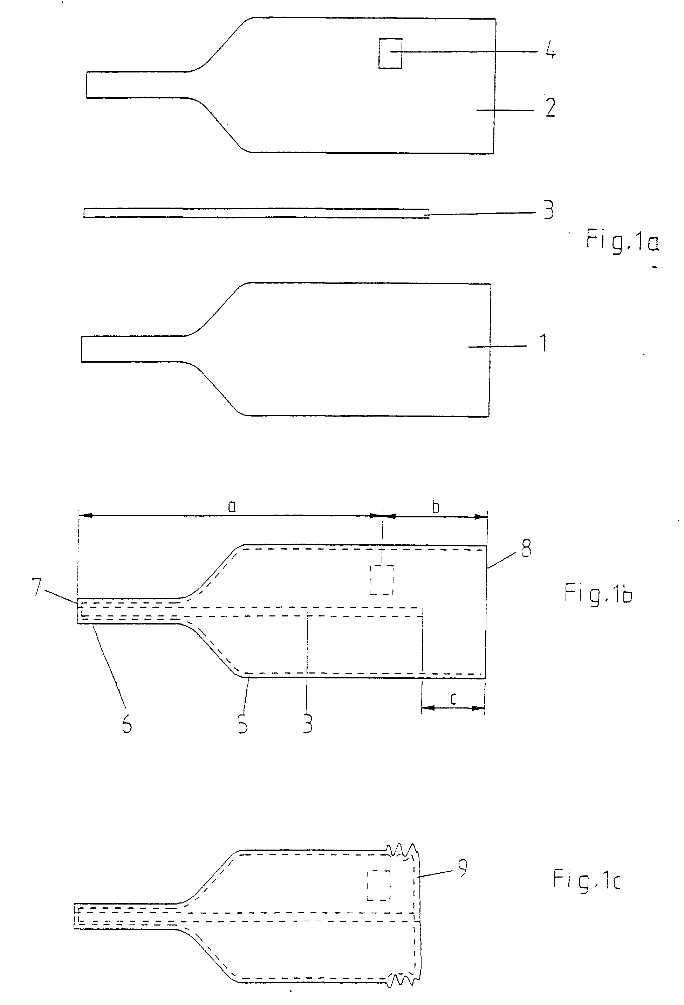

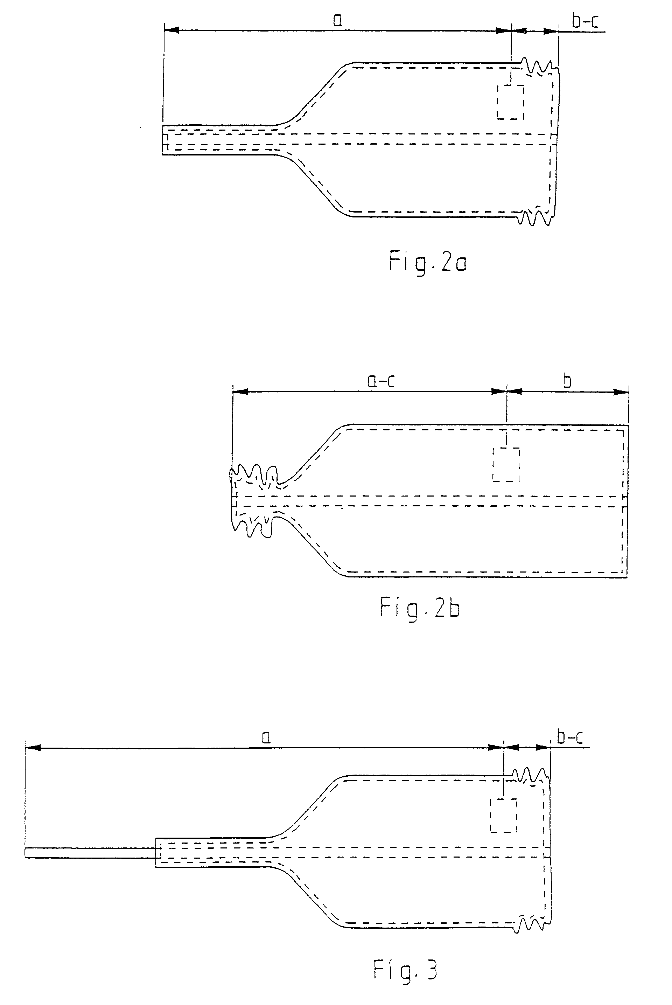

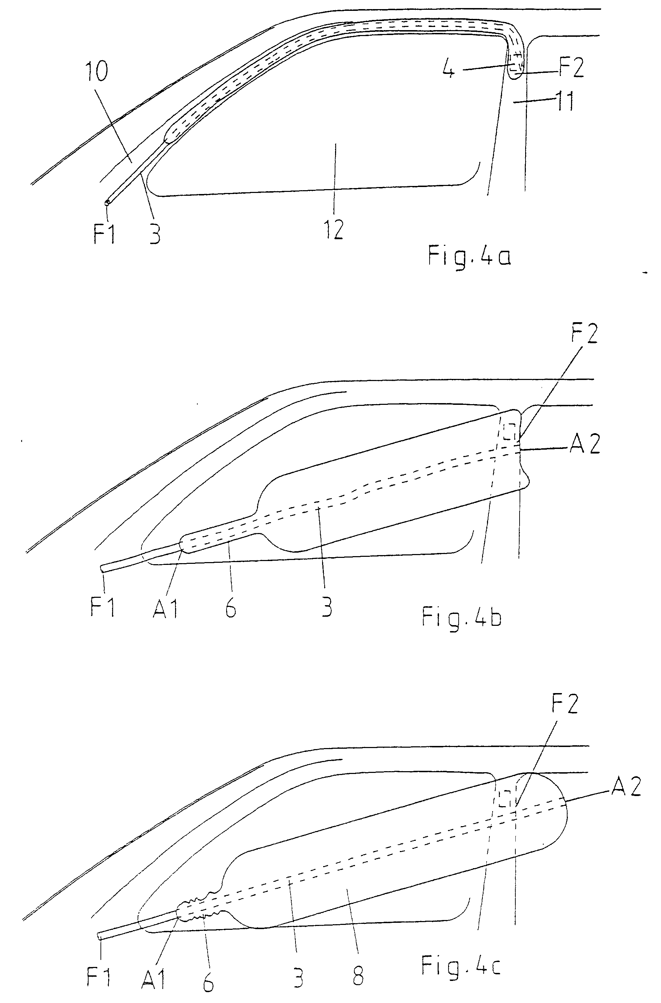

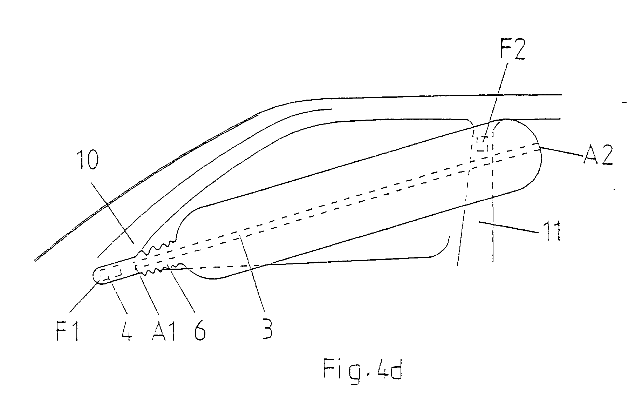

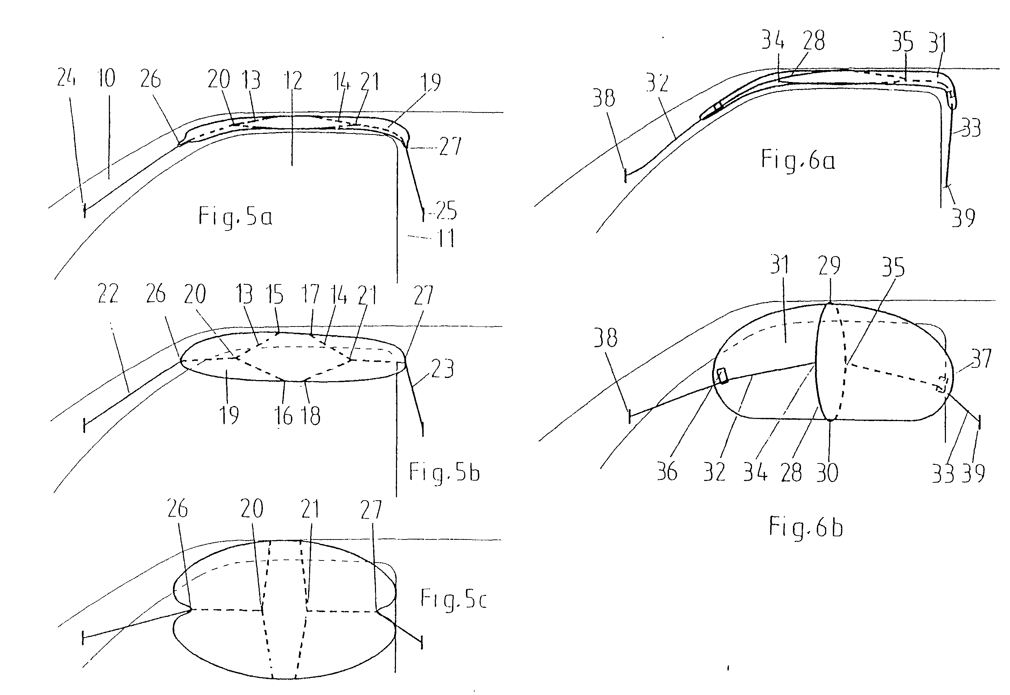

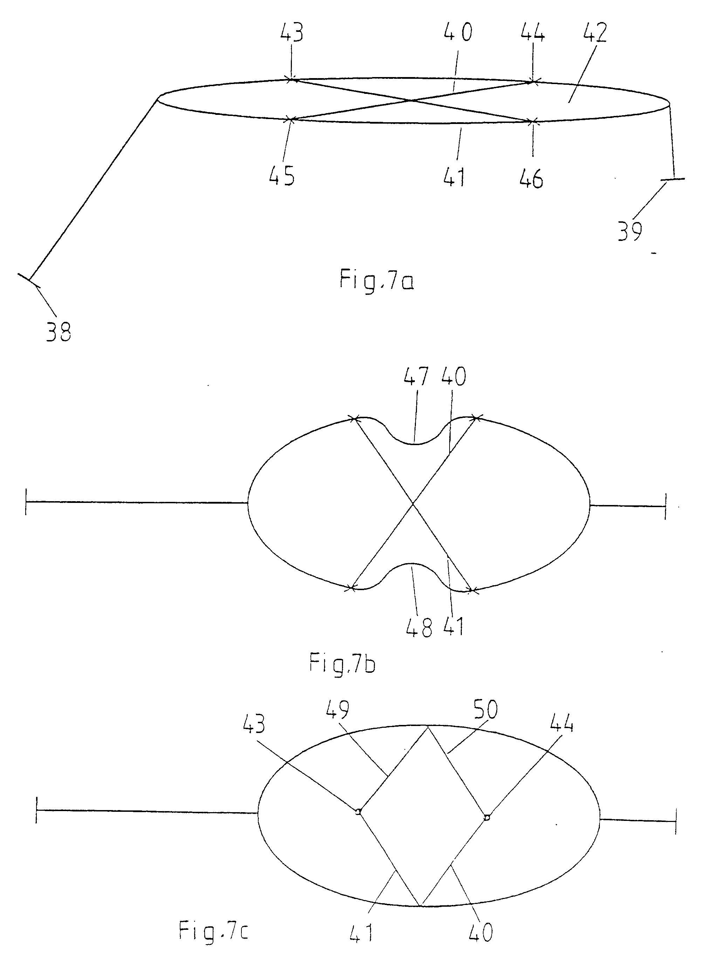

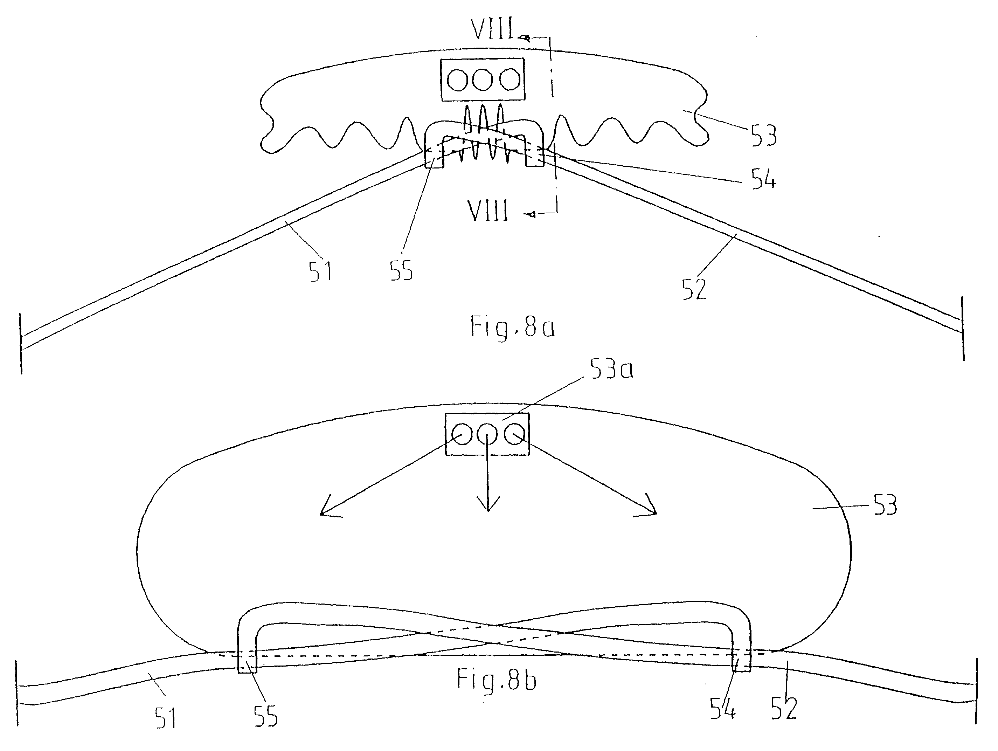

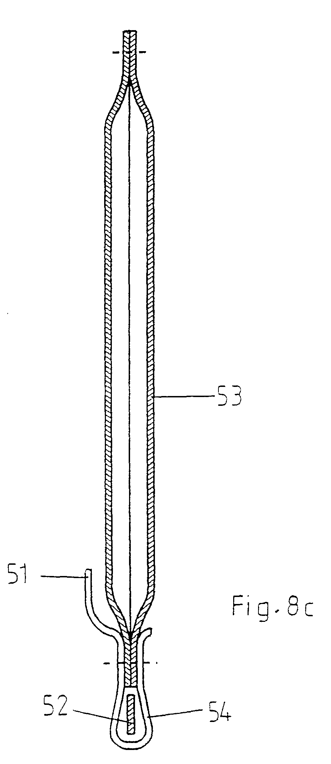

Beim Ausführungsbeispiel der Figuren 8a bis 8c sind zwei Straffleinen 51, 52 außerhalb des Gassacks 53 vorgesehen. Diese sind mit einem Ende,am Kraftfahrzeug befestigt und deren anderes Ende ist am Gassack in Form einer Lasche 54, 55 befestigt. In der Lasche einer Straffleine verläuft die jeweils andere Straffleine, d.h. in der Lasche der Straffleine 51 veläuft die Straffleine 52 und umgekehrt. In der Fig 8a ist der Gassack 53 in der gefalteten Lage dargestellt. Bei Entfaltung des Gassackes infolge des Gasaustritts aus dem Gasgenerator 53a werden die Straffleinen 51, 52 mitgezogen und durch die Laschen 54, 55 umgelenkt, bis im aufgeblasenem Zustand des Gassacks die in Fig. 8b dargestellte Lage der Straffleinen erreicht ist. Aus der Schnittdarstellung der Fig. 8c ist der Verlauf der Straffleine 52 in der Lasche 54 erkennbar.

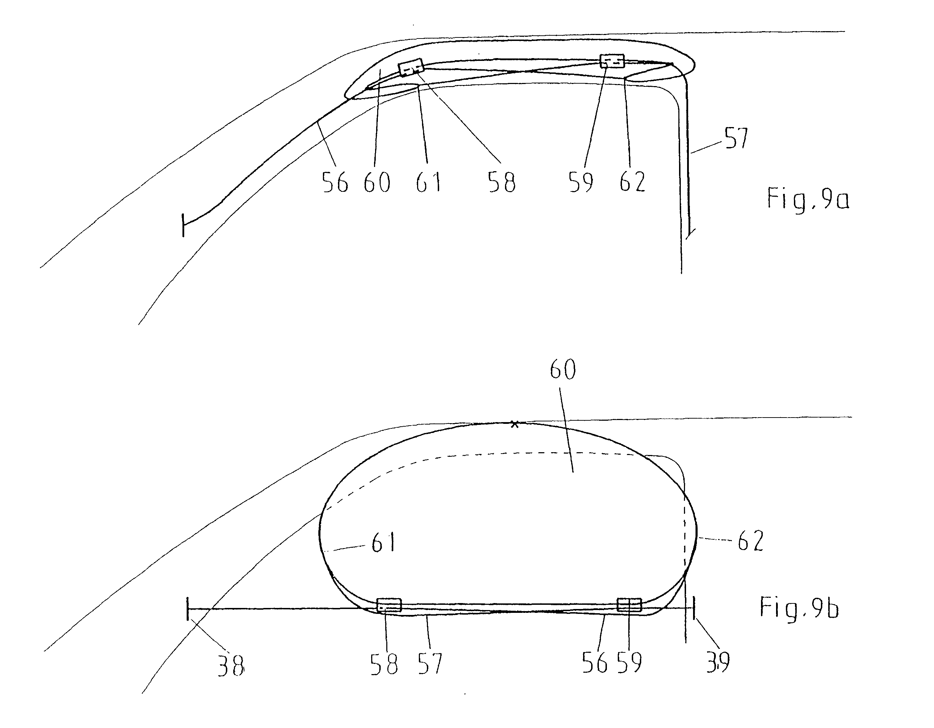

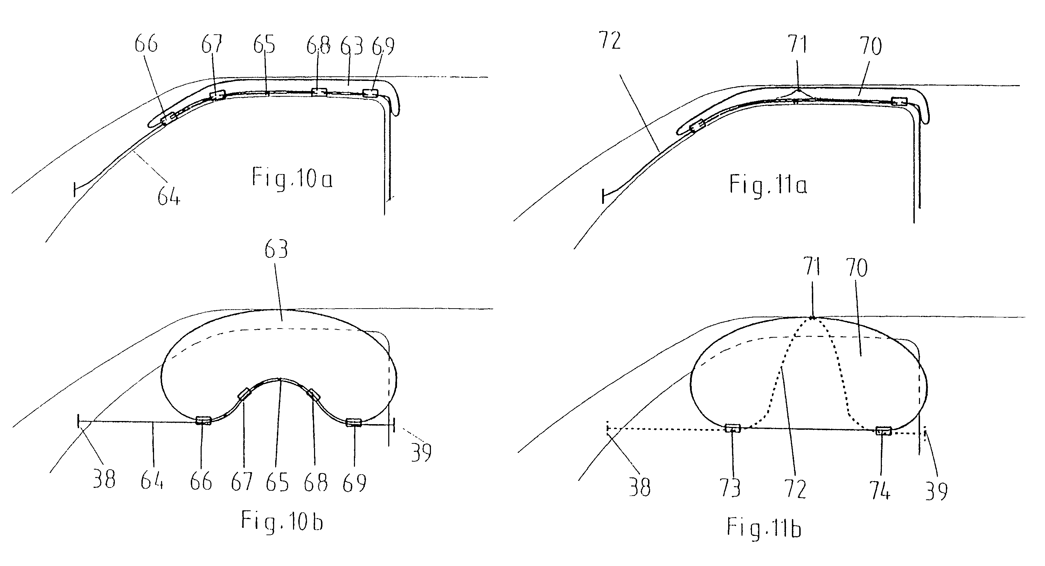

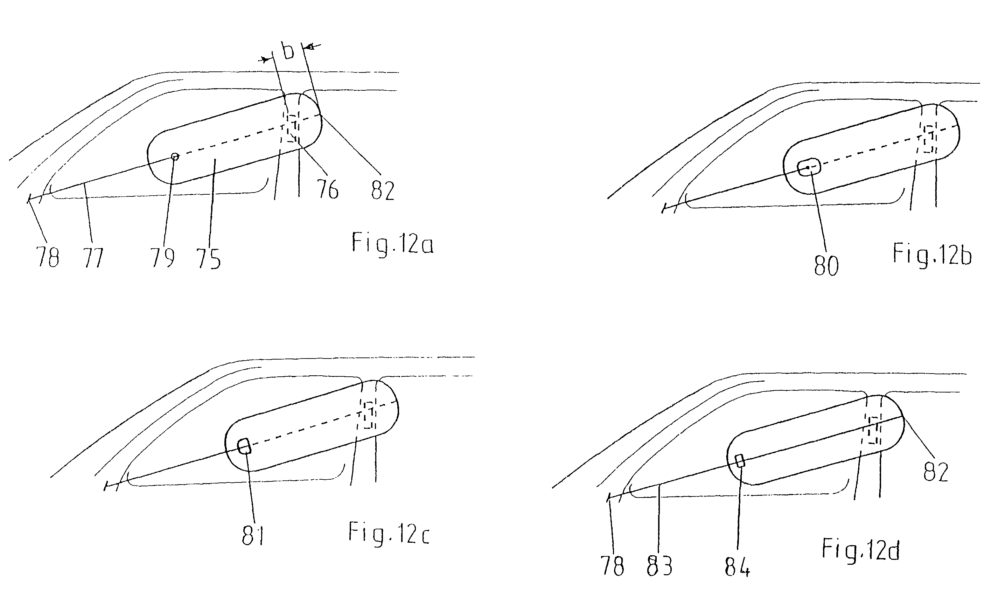

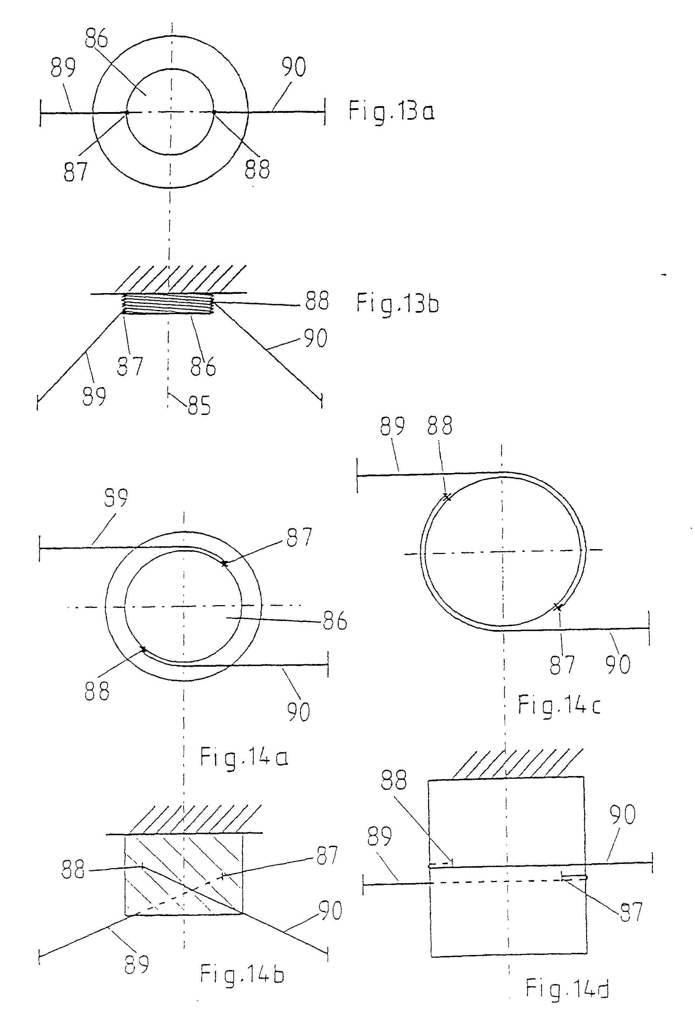

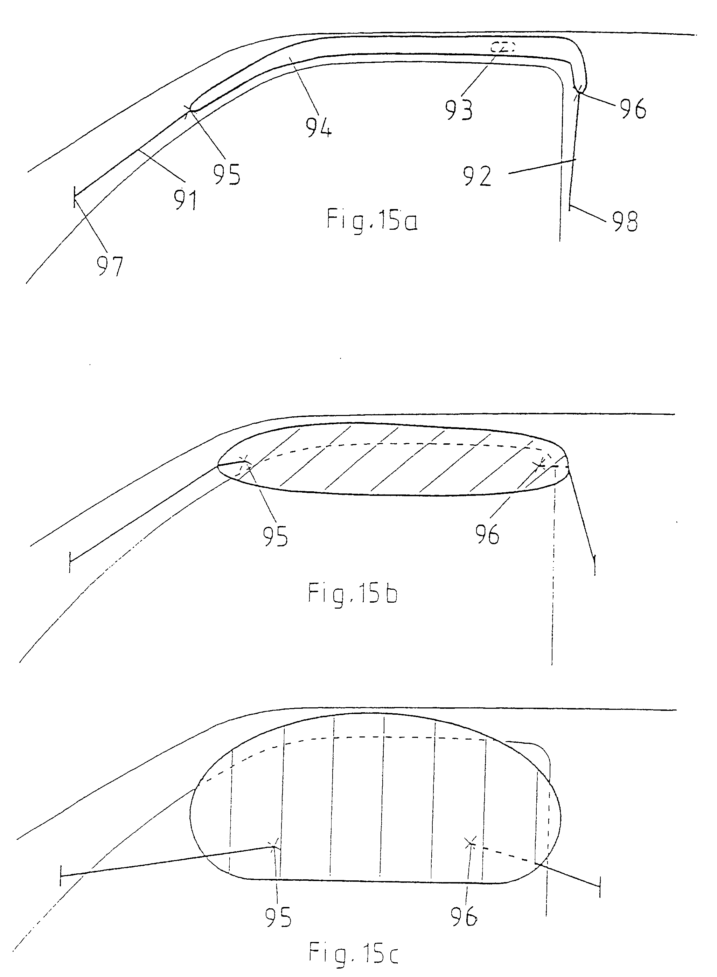

Auch beim Ausführungsbeispiel der Figuren 9a und b sind zwei Straffleinen 56, 57 außerhalb eines Gassacks 60 vorgesehen, die durch Laschen 58, 59 an einem Ende des Gassacks zu gegenüberliegenden Enden 61, 62 des Gassacks geführt sind. Die Enden 61, 62 sind in der gefalteten Lage des Gassacks in Richtung der Befestigungsstelle der jeweiligen Straffleine am Kfz gefaltet, wie es aus Fig. 9a erkennbar ist. Bei der Entfaltung des Gassacks werden die Enden 61, 62 von der Befestigungsstelle der jeweiligen Straffleine entfernt. Die Bewegung des Gassaacks bei der Entfaltung wird auf die Straffleinen übertragen, die mittels der jeweiligen Laschen 58, 59 zum Kfz-seitigen Befestigungspunkt 38 bzw. 39 umgelenkt werden.

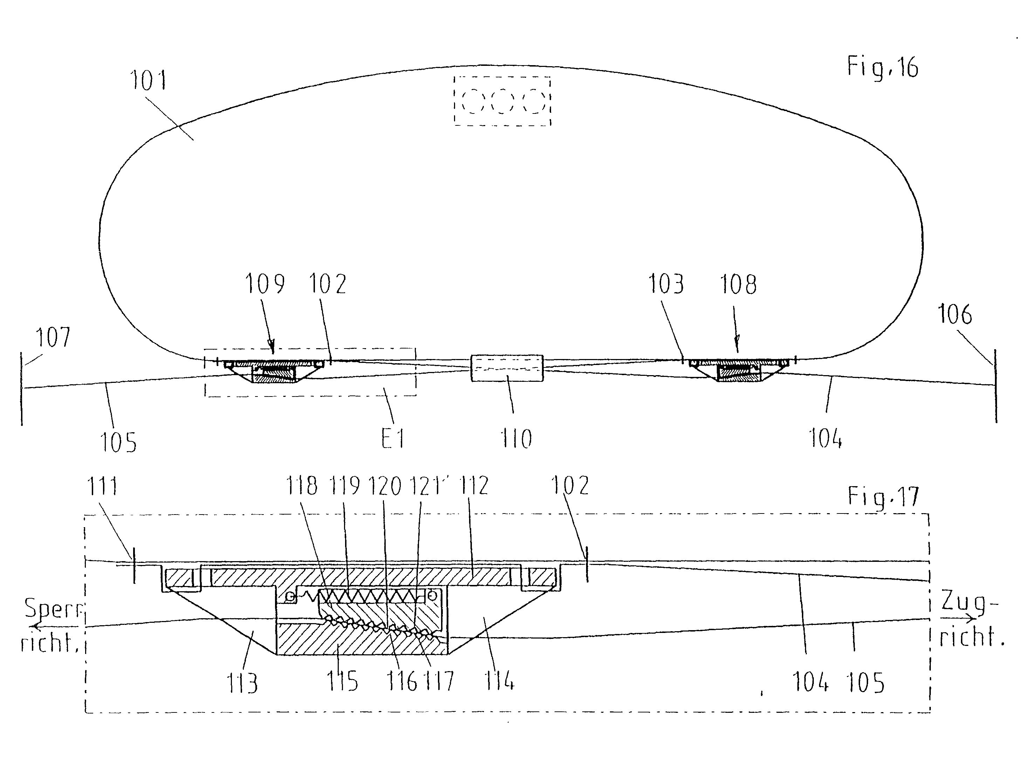

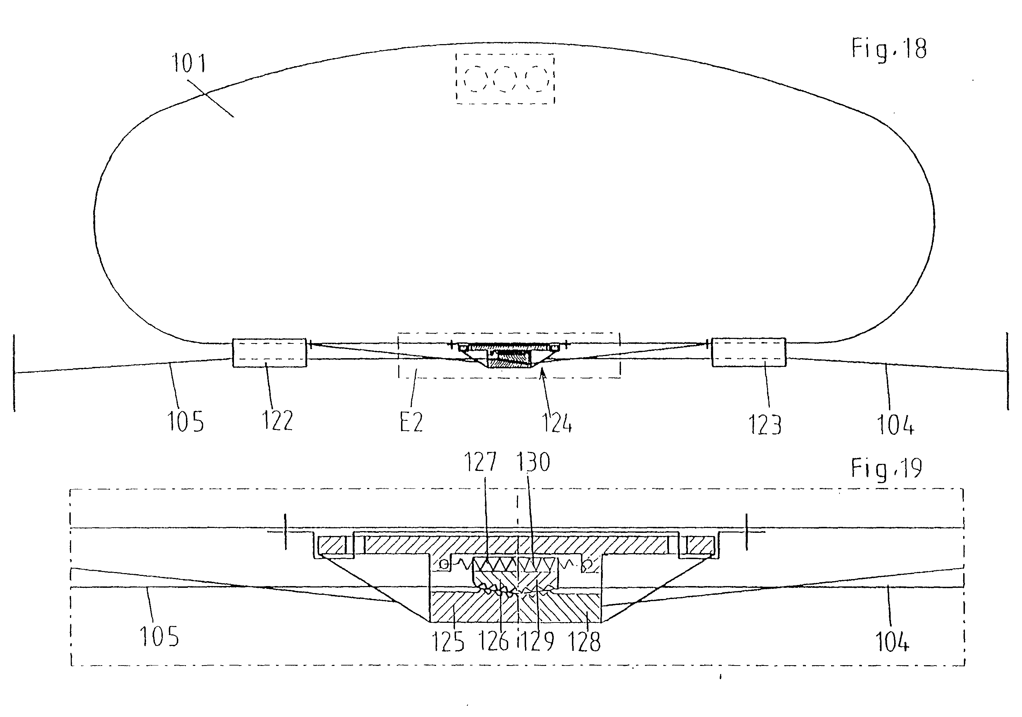

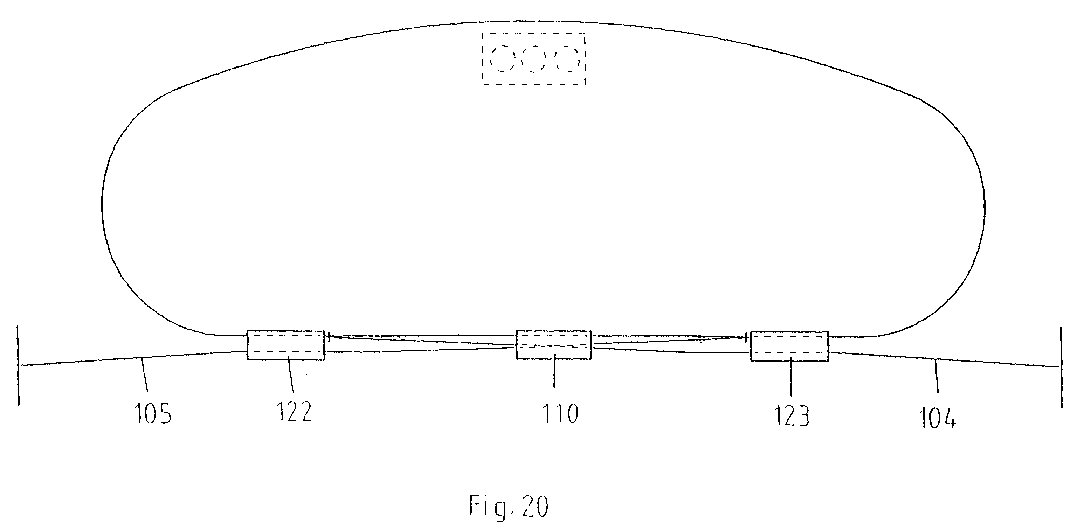

In der Fig. 16 ist ein Gassack 101 im aufgeblasenen Zustand dargestellt. An diesem sind an Befestigungsstellen 102 und 103 Straffleinen 104 bzw. 105 befestigt, deren jeweils andere Enden an Befestigungsstellen 106 bzw. 107 mit dem Kraftfahrzeug verbunden sind. Jeder Straffleine 104 bzw. 105 ist ein Rücklaufsperre 108 bzw. 109 im Bereich der Enden des Gassackes zugeordnet. Beiden Straffleinen ist eine Stützlasche 110 zugeordnet, die zwischen den Rücklaufausgehend über die Rücklaufsperre 108 und die Stützlasche 110 zur Befestigungsstelle 102 am Gassack. Die Straffleine 105 verläuft von einer der Befestigungsstelle 106 gegenüberliegenden Befestigungsstelle 107 am Kraftfahrzeug ausgehend über die Rücklaufsperre 109 und die Stützlasche 110 zur Befestigungsstelle 103 am Gassack.

In der Fig. 17 ist die Rücklaufsperre 109 vergrößert dargestellt. Sie ist an der Befestigungsstelle 102 zusammen mit der Straffleine 104 am Gassack 101 befestigt und weiterhin an einer Befestigungsstelle 111 mit diesem verbunden. Die Rücklaufsperre weist einen Grundkörper 112 mit Stegen 113, 114 auf, an denen ein Keil 115 befestigt ist. Dessen Keilfläche 116 ist mit quer zur Zugrichtung der Straffleine 105 verlaufenden Riefen 117 versehen. Dem festen Keil 115 ist ein beweglicher Keil 118 zugeordnet. Dieser ist über eine Zugfeder 119 mit dem Grundkörper 112 verbunden und die Zugfeder verläuft etwa in Zugrichtung der Straffleine 105. Die Keilfläche 120 des Keils 118 weist ebenfalls quer zur Zugrichtung der Straffleine 105 verlaufende Riefen 121 auf.

Im gefalteten Zustand des Gassackes (nicht dargestellt), in der dieser z.B. über einem Türrahmen eine gewölbte Lage einnimmt, sind die zwischen den Befestigungsstellen 106 bzw. 107 und der zugeordneten Rücklaufsperre 108 bzw. 109 vorhandenen Abschnitte der Straffleinen 104 bzw. 105 länger als in dem in Fig. 16 dargestellten entfalteten Zustand des Gassackes. Der jeweilige Abschnitt der Straffleinen zwischen der Rücklaufsperre und den Befestigungsstellen 102 und 103 ist entsprechend kürzer.

Die Funktonsweise der Rücklaufsperren soll anhand der Rücklaufsperre 109 erläutert werden. Bei Entfaltung des Gassackes wird die am Befestigungspunkt 103 mit dem Gassack verbundene Straffleine 105 infolge der Ausbreitung dieses Teils des Gassackes nach rechts in die in Fig. 17 gezeigte Zugrichtung durch die Rücklaufsperre gezogen. Das ist möglich, da unter der Wirkung der Straffleine 105 der bewegliche Keil 118 entgegen der Wirkung der Zugfeder 119 vom feststehenden Keil 115 wegbewegt wird. Die Rücklaufsperre wirkt in dieser Phase als Führungslasche. Wenn unmittelbar nach der Entfaltung durch Entweichen des Gases der Gassack zusammenfällt, wird die Straffleine 105 entspannt. Dann wird der bewegliche Keil 118 durch die Zugfeder 119 gegen den festen Keil 115 gedrückt und klemmt die Straffleine 105 zwischen ihren Keilflächen 116 und 120 ein. Diese Wirkung wird durch die Riefen 117 und 121 unterstützt. Wäre anstelle der Rücklaufsperre nur eine Führungslasche vorgesehen, könnte sich in der Entspannungsphase des Gassackes wegen der Verschiebung der Befestigungsstelle 103 der Straffleine 105 nach links der Abschnitt der Straffleine 105 zwischen seiner Befestigungsstelle 107 am Kraftfahrzeug und der Führungslasche wieder verlängern. Dadurch bestände die Gefahr des Einknickens des Gassackes nach oben und damit die Gefahr, daß der Gassack den Körper des Insassen nicht mehr abstützt.

Diese für die Rücklaufsperre 109 beschriebene Wirkung tritt auch bei der Rücklaufsperre 108 für die Straffleine 104 und damit für die andere Seite des Gassackes 101 ein.

Das Einknicken des Gassackes wird zusätzlich durch die Stützlasche 110 verhindert, die sich in der Mitte des Gassackes befindet, d.h. am Ort der größten Wahrscheinlichkeit des Einknickens des Gassackes.

Eine weitere Ausführungsform der Erfindung ist in den Figuren 18 und 19 dargestellt. Dort sind anstelle der Rücklaufsperren Führungslaschen 122 und 123 vorgesehen. Zwischen diesen ist eine Doppelrücklaufsperre 124 am Gassack 101 angebracht. Diese weist nebeneinander liegende Keilpaare auf. So ist für die Straffleine 105 ein feststehender Keil 125, ein beweglicher Keil 126 und eine Zugfeder 127 vorgesehen. Neben diesem Keilepaar sind für die Straffleine 104 ein festehender Keil 128, ein beweglicher Keil 129 und eine Zugfeder 130 vorgesehen. Die Wirkungsweise der Doppelrücklaufsperre entspricht der vorher beschriebenen Wirkungsweise der Rücklaufsperren 108 und 109.

Das Einknicken des Gassackes kann in gewissem Umfang auch dadurch verhindert werden, daß zwischen zwei Führungslaschen 122 und 123 eine Stützlasche 110 vorgesehen ist, wie es in der Fig. 20 dargestellt ist. Durch diese verlaufen beide Straffleinen 104 und 105.

## Patentansprüche

1. Airbag, insbesondere Seitenairbag mit vorzugsweise schlauchartiger Form, der mit mindestens zwei Stellen des Kfz in Verbindung steht und im unaufgeblasenen Zustand in einem gewölbten Stauraum untergebracht ist, mit zwei Straffleinen für das Verkürzen des entfalteten Gassacks zwischen dem Gassack und je einer Befestigungsstelle am Kfz, wobei die Straffleinen durch den sich aufblasenden Gassack straffbar sind,
**dadurch gekennzeichnet,**
**daß** die Straffleinen (51, 52; 56,57; 104,105) durch Laschen (54, 55; 58, 59; 108,109 122, 123) an einem Ende des Gassacks zu gegenüberliegenden Enden des Gassacks geführt sind , wobei die Befestigungsstellen der Straffleinen am Gassack zusammen mit diesem beim Aufblasen des Gassacks von der Befestigungsstelle der jeweiligen Straffleine am Kfz wegbewegbar sind.

2. Airbag nach Anspruch 1 **dadurch gekennzeichnet, daß** die Straffleine (56, 57) im unaufgeblasenem Zustand des Gassacks mit dem in Richtung der Lasche gefalteten anderen Ende (62, 61) des Gassacks verbunden ist.

3. Airbag nach Anspruch 1 oder 2, **dadurch gekennzeichnet, daß** die Strafleinen (51, 52) an ihren Befestigungsstellen mit dem Gassack als Führungslaschen (54, 55) für die jeweils andere Straffleine (52, 51) ausgebildet sind.

4. Airbag nach mindestens einem der vorhergehenden Ansprüche, **dadurch gekennzeichnet, daß** die Straffleinen aus unelastischem oder elastisch verformbarem Material bestehen.

5. Airbag nach nach mindestens einem der vorhergehenden Ansprüche, **dadurch gekennzeichnet, daß** jede Straffleine (104, 105) mindestens eine Rücklaufsperre (108, 109, 124) aufweist, die eine Bewegung der Straffleine (104, 105) entgegen der Entfaltungsrichtung des Gassackes (101) verhindert, eine Bewegung der Straffleine (104, 105) in Entfaltungsrichtung des Gassackes (101) dagegen zuläßt und/oder daß mindestens eine zusätzliche Stützlasche (110) für die Führung der Straffleine im knickgefährdeten mittleren Bereich des Gassackes (101) vorgesehen ist.

6. Airbag nach mindestens einem der vorhergehenden Ansprüche, **dadurch gekennzeichnet, daß** die Rücklaufsperre (108, 109) als Führungslasche ausgebildet ist und anstelle einer Führungslasche am Gassack befestigt ist.

7. Airbag nach mindestens einem der vorhergehenden Ansprüche, **dadurch gekennzeichnet, daß** bei Anordnung von zwei Straffleinen (104, 105) jede Straffleine eine Rücklaufsperre (108, 109) aufweist.

8. Airbag nach mindestens einem der vorhergehenden Ansprüche, **dadurch gekennzeichnet, daß** bei Anordnung von zwei sich kreuzenden Straffleinen in deren Kreuzungsbereich eine Doppelrücklaufsperre (124) vorgesehen ist.

9. Airbag nach mindestens einem der vorhergehenden Ansprüche, **dadurch gekennzeichnet, daß** die Rücklaufsperre zwei relativ zueinander bewegbare Keile ((115, 118) aufweist, zwischen deren gegenüberliegenden Keilflächen (116, 120) die Straffleine verläuft und die durch mindestens ein elastisch verformbares Befestigungsmittel (119) gegeneinander drückbar sind.

10. Airbag nach Anspruch 9, **dadurch gekennzeichnet, daß** ein Keil (115) fest angeordnet ist, während der andere Keil (118) gegenüber dem festen Keil verschiebbar ist und das elastisch verformbare Befestigungsmittel (119) aufweist.

11. Airbag nach Anspruch 9 oder 10, **dadurch gekennzeichnet, daß** als elastisch verformbares Befestigungsmittel eine Zugfeder (119) vorgesehen ist, deren Wirkrichtung im wesentlichen entgegen der Zugrichtung der Straffleine (105) bei der Entfaltung des Gassacks (101) verläuft.

12. Airbag nach mindestens einem der Ansprüche 9 bis 11, **dadurch gekennzeichnet, daß** die gegenüberliegenden Keilflächen (116, 120) Riefen (117, 121) aufweisen, die zumindest annnähernd quer zur Bewegungsrichtung der Straffleine (105) verlaufen.

13. Airbag nach mindestens einem der vorhergehenden Ansprüche, **dadurch gekennzeichnet, daß** mindestens eine zusätzliche Stützlasche (110) zwischen an gegenüberliegenden Enden des Gassacks vorgesehenen Rücklaufsperren (108, 109) bzw. Führungslaschen (122, 123) vorgesehen ist.

## Claims

1. Airbag more particularly lateral airbag with preferably tubular shape which is connected to at least two points of the vehicle and is stored in the non-inflated state in a curved storage area, with two tensioning cords for the shortening of the unfolded gas bag between the gas bag and each fastening point on the vehicle, whereby the tensioning cords are tensionable by the inflating gas bag,
**characterised in that**
the tensioning cords (51,52; 56,57; 104,105) are guided by plates (54,55; 58,59; 108,109; 122,123) at one end of the gas bag to the other end of the gas bag, wherein the fastening points of the tensioning cords on the gas bag are, together with the cords, movable away on inflating of the gas bag from the fastening points of the tensioning cords on the vehicle.

2. Airbag according to Claim 1, **characterised in that** the tensioning cord (56, 57) in the uninflated state of the gas bag is connected with the other end (62,61) of the gas bag folded in the direction of the plate.

3. Airbag according to Claim 1 or Claim 2, **characterised in that** the tensioning cords (51, 52) are formed at their fastening points with the gas bag as guide shackles (54, 55) for each other tensioning cord (52, 51).

4. Airbag according to at least one of the preceding claims **characterised in that** the tensioning cords consist of non-elastic or elastically deformable material.

5. Airbag according to at least one of the preceding claims, **characterised in that** each tensioning cord (104, 105) has at least one return lock (108, 109, 124) which prevents movement of the tensioning cord (104, 105) against the unfolding direction of the gas bag (101), but allows movement of the tensioning cord (104,105) in the unfolding direction of the gas bag (101) and/or that at least one additional support shackle (110) is provided for guiding the tensioning cord in the middle area of the gas bag (101) which is liable to kink.

6. Airbag according to at least one of the preceding claims, **characterised in that** the return lock (108, 109) is formed as a guide shackle and is fixed on the gas bag in place of a guide shackle.

7. Airbag according to at least one of the preceding claims, **characterised in that** when using two tensioning cords (104, 105) each tensioning cord has a return lock (108, 109).

8. Airbag according to at least one of the preceding claims, **characterised in that** when using two criss-crossing tensioning cords a double return lock (124) is provided at their cross-over point.

9. Airbag according to at least one of the preceding claims, **characterised in that** the return lock has two relatively movable wedges (115, 118) whereby the tensioning cord runs between their opposing wedge faces (116, 120) and the wedges can be pressed against each other by at least one elastically deformable fastening means (119).

10. Airbag according to claim 9, **characterised in that** one wedge (115) is mounted fixed whilst the other wedge (118) is displaceable opposite the fixed wedge and has the elastically deformable fastening means (119).

11. Airbag according to claim 9 or 10, **characterised in that** a draw spring (119) is provided as the elastically deformable fastening means and the active direction of the spring runs substantially against the pull direction of the tensioning cord (105) during unfolding of the gas bag (101).

12. Airbag according to at least one of claims 9 to 11, **characterised in that** the opposing wedge faces (116, 120) have grooves (117, 121) which run at least approximately crosswise relative to the direction of movement of the tensioning cord (105).

13. Airbag according to at least one of the preceding claims, **characterised in that** at least one additional support shackle (110) is provided between guide shackles (122, 123) or return locks (108, 109) provided on opposite ends of the gas bag.

## Revendications

1. Airbag, en particulier airbag latéral, de préférence de forme tubulaire, qui est en liaison avec au moins deux emplacements du véhicule automobile et qui, dans l'état non gonflé, est logé dans un compartiment de rangement bombé, comportant deux cordons tendeurs pour le raccourcissement du sac à gaz déployé entre le sac à gaz et un emplacement de fixation respectif sur le véhicule automobile, les cordons tendeurs pouvant être tendus par le sac à gaz en cours de gonflage,
**caractérisé en ce que**
les cordons tendeurs (51, 52 ; 56, 57 ; 104, 105) sont guidés par des pattes (54, 55 ; 58, 59 ; 108, 109 ; 122, 123) à une extrémité du sac à gaz vers des extrémités opposées du sac à gaz, les emplacements de fixation des cordons tendeurs sur le sac à gaz pouvant être déplacés conjointement avec ce dernier en éloignement de l'emplacement de fixation du cordon tendeur respectif sur le véhicule automobile, lors du gonflage du sac à gaz.

2. Airbag selon la revendication 1, **caractérisé en ce que** dans l'état non gonflé du sac à gaz, le cordon tendeur (56, 57) est relié à l'autre extrémité (62, 61) du sac à gaz, qui est repliée en direction de la patte.

3. Airbag selon la revendication 1 ou 2, **caractérisé en ce que** les cordons tendeurs (51, 52) sont réalisés, à leurs emplacements de fixation sur le sac à gaz, sous forme de pattes de guidage (54, 55) pour l'autre cordon tendeur respectif (52, 51).

4. Airbag selon l'une au moins des revendications précédentes, **caractérisé en ce que** les cordons tendeurs sont constitués d'un matériau non élastiquement ou élastiquement déformable.

5. Airbag selon l'une au moins des revendications précédentes, **caractérisé en ce que** chaque cordon tendeur (104, 105) comprend au moins un blocage anti-retour (108, 109, 124) qui interdit un mouvement du cordon tendeur (104, 105) en sens opposé à la direction de déploiement du sac à gaz (101), mais qui autorise un mouvement du cordon tendeur (104, 105) en direction de déploiement du sac à gaz (102) et/ou **en ce qu'**il est prévu au moins une patte de soutien supplémentaire (110) pour guider le cordon tendeur dans la zone centrale, menacée de flambage, du sac à gaz (101).

6. Airbag selon l'une au moins des revendications précédentes, **caractérisé en ce que** le blocage anti-retour (108, 109) est réalisé sous forme de patte de guidage et est fixé à la place d'une patte de guidage sur le sac à gaz.

7. Airbag selon l'une au moins des revendications précédentes, **caractérisé en ce que** lorsque deux cordons tendeurs (104, 105) sont prévus, chaque cordon teneur comprend un blocage anti-retour (108, 109).

8. Airbag selon l'une au moins des revendications précédentes, **caractérisé en ce que** lorsque deux cordons tendeurs se croisant sont prévus, il est prévu un double blocage anti-retour (124) dans leur zone de croisement.

9. Airbag selon l'une au moins des revendications précédentes, **caractérisé en ce que** le blocage anti-retour comprend deux coins (115, 118) mobiles l'un par rapport à l'autre, ayant des surfaces en coin opposées entre lesquelles s'étend le cordon tendeur et qui sont susceptibles d'être pressées l'une contre l'autre par au moins un moyen de fixation (119) élastiquement déformable.

10. Airbag selon la revendication 9, **caractérisé en ce qu'**un coin (115) est agencé de façon fixe tandis que l'autre coin (118) est mobile par rapport au coin fixe et comprend le moyen de fixation (119) élastiquement déformable.

11. Airbag selon la revendication 9 ou 10, **caractérisé en ce qu'**il est prévu un ressort de traction (119) comme moyen de fixation élastiquement déformable, dont la direction d'action s'étend sensiblement en sens inverse à la direction de traction du cordon tendeur (105) lors du déploiement du sac à gaz (101).

12. Airbag selon l'une au moins des revendications 9 à 11, **caractérisé en ce que** les surfaces en coin opposées (116, 120) présentent des stries (117, 121) qui s'étendent au moins approximativement transversalement à la direction de mouvement du cordon tendeur (105).

13. Airbag selon l'une au moins des revendications précédentes, **caractérisé en ce qu'**il est prévu au moins une patte de soutien supplémentaire (110) entre les blocages anti-retour (108, 109) ou les pattes de guidage (122, 123) prévu(e)s aux extrémités opposées du sac à gaz.
